# EUROPEAN PATENT APPLICATION

(11) **EP 1 398 734 A2**
(43) Date of publication of application: **17.03.2004**
(21) Application number: 03255667.2
(22) Date of filing: 10.09.2003
(51) Int. Cl.: G06T 15/20

(54) **Texture mapping**

(30) Priority: 10.09.2002 GB 0220972
(71) Applicant: British Broadcasting Corporation, London W1A 1AA (GB)
(72) Inventor: Grau, Oliver, c/o BBC Research & Development, Tadworth Surrey KT20 6NP (GB)
(74) Representative: Kazi, Ilya

(57) **Abstract**

A texture map is provided for a three dimensional object which advantageously makes use of a data set having the density of image source pixels. The method is highly advantageous for generating models from real objects and gives good compression ratios and may provide optimal filling of a texture map.

## Description

The present invention relates to texture mapping of three-dimensional (3D) objects.

In order to create realistic looking two-dimensional images of synthetic three-dimensional objects, it is well-known to store a three-dimensional model of the object and to store a texture map for the object. Texture mapping means the mapping of a function to a surface in 3D. A texture map is usually stored as a 2D image and therefore gives a discreet 2D function with the co-ordinates (u,v). In order to apply this 2D function to the 3D surface a 2D parameterisation of the surface is needed. Thus, using a suitable transformation, a two-dimensional texture, commonly represented as an image can be "wrapped around" the surface of the three-dimensional object to give the appearance of colour and texture.

Many examples of such techniques can be found in computer graphics methods to synthesise images of a 3D virtual scene. The virtual scene is usually described as 3D shape and surface properties like colour and reflectivity. Examples of recent computer graphics methods and standards are OpenGL, VRML 97 (ISO/IEC 14772-1:1997) and animation packages from Renderman, Softimage or Alias|Wavefront. These methods make extensive use of texture maps, as proposed by J.F. Blinn, and M.E. Newell, "Texture and reflection in computer generated images", Comm. Of the ACM, 19, 10, Oct. 1976 or P.S. Heckbert, "Survey of texture mapping", IEEE Computer Graphics and Applications, p 215-223, August 1990.

For arbitrary 3D shapes with complex topology it is often hard or even impossible to find an unambiguous 2D parameterisation of the surface. Simple convex shapes, like spheres are often described using spherical or cylindrical co-ordinates. Both types of mappings are used for cartographic maps and for texturing models of human heads in computer graphics. However, for more complex 3D shapes, like a ring these mappings are not applicable, because they can not cope with occluded areas.

For generating models of "real" 3D objects, in 3D photography, it is necessary to obtain both a 3D model and an appropriate texture map. In applications, like 3D-photography it would be desirable for 3D shape and texture maps to be computed automatically. 3D-photography systems perform usually two steps to create a model of an object: First the 3D shape is recovered, using a 3D-reconstruction or 3D-scanning technique and second the texture is recovered using one or more images of the object. Examples of 3D-reconstruction techniques are: Laser triangulation (laser-scanner), time-of-flight systems, passive stereo, structured light and multi-camera systems using shape from silhouette.

For the automatic generation of texture maps usually several camera images of the object are needed to cover all sides ofthe object. Therefore either a camera is moved around a static object taking several pictures or a multi-camera system is used for dynamic objects.

Current techniques for automatic texture map generation mainly use simple heuristics that create local consistent texture maps. An example of these techniques is described by W. Niem, H. Broszio, "Mapping texture for multiple camera views onto 3D-object models for computer animation", in Proceedings of the International Workshop on Stereoscopic and Three Dimensional Imaging , September 6 - 8, 1995, Santorini, Greece. This method identifies regions in the original images that provide the best image resolution of a particular part of the 3D surface, compared with all available images in which this 3D part is visible. The texture map is created by copying the identified areas from the original images into a texture patch. In order to get a single texture map these texture patches are copied into one image. The resulting texture map is not coherent, because the patches are stored in a number of rectangular windows of varying size, not preserving the original neighbourhood of the 3D surface. Therefore the texture map is not continuous. Moreover there are many unused areas in the final texture map. This can lead to inefficient storage. Due to the lack of coherency the application of image compression techniques, like JPEG may also quite inefficient on the resulting texture maps.

An example of a technique which can be used to generate a better continuous parameterisation of a 3D surface is called pelting, described by Dan Piponi and George Borshukov in "Seamless Texture Mapping of Subdivision Surfaces by Model Pelting and Texture Blending", Proceedings of SIGGRAPH'2000, New Orleans, LA: ACM SIGGRAPH, pp. 471-478; August (2000). This method is inspired by the principle of pelting animals by cutting the 3D surface along selected edges and iteratively flattening it using a mathematical spring model. The algorithm gives good results, because it preserves the 3D neighbourhood in the texture. A drawback however is that the method is not fully automatic as the cut must normally be specified interactively. A further drawback is that the filling rate of the final map is not optimal. Further the method does take into account the automatic creation of texture maps from multiple images. Thus, although useful for interactive texture mapping, it does not optimally address the problem of automatic texture generation from multiple images.

The present invention aims to provide a method and system for the automatic 2D parameterisation of a 3D surface and the generation of texture maps from multiple images. At least in preferred embodiments, the invention aims to provide texture maps which have a high filling rate, preserve the neighbourhood and consider the original resolution of the camera images.

By way of general background, a technique known as "Self Organising Mappings" is known for generating a mapping from a higher dimensional to a lower dimensional space by learning from examples. The basic technique is described by Kohonen in "Self Organizing Maps", Springer, 1995, Berlin, Heidelberg. for the parameterisation. In this context it will usually map from 3D to 2D. The learning examples are 3D points on the surface, generated by sampling the model surface.

It is noted that Self Organising Mapping (SOM) techniques have been used in the creation of 3D polygonal meshes, as described by Y. Yu, "Surface Reconstruction from Unorganized Points Using Self-Organizing Neural Networks", Proc. of IEEE conf. Visualization '99. Although this paper does not disclose a method of texture mapping, it recognizes that texture mapping is a potentially troublesome ("painful") problem. However, it is noted that the Self-Organising Map technique is used to generate a polygonal mesh in a particular manner as a result of which it is suggested that subsequent texture mapping should be (more) straightforward. Thus this paper does not directly solve the problem of texture mapping.

The invention seeks to provide a solution to the problem of generating a texture map which can be applied to obtaining texture maps from multiple camera images.

According to a first aspect, the invention provides a method of providing a texture map for a three-dimensional object, the method comprising:
obtaining a plurality of images of a three dimensional object, wherein each image corresponds to a different view of the object and contains a number of object pixels corresponding to a portion of the three dimensional object visible in the respective view of the three dimensional object;
obtaining a three-dimensional shape reconstruction model of the object;
deriving a surface parameterisation of the object by iteratively approximating a parameterisation based on object pixels from each of the plurality of images to produce a list of vertices;
defining a texture map having elements corresponding to the vertices;
determining a three dimensional position for each element of the texture map;
projecting the determined three dimensional position for each element into at least one of the plurality of images; and
determining colour values for the elements of the texture map from the object pixels corresponding respectively to the determined three dimensional positions of the elements.

In this way, the learning examples are generated by sampling the visible pixels ofthe model in the camera images. Sampling the visible pixels of the model has the useful property that the data set for the iterative, preferably Self-Organising Map learning represents the density of image pixels. A feature of the Self-Organising Map learning algorithm in particular (but this can be made the case for alternative iterative algorithms) is that the computed 2D parameterisation preserves this density. Further Self-Organising Maps preserve the topology, i.e. the 3D surface neighbourhood is preserved and the texture mapping is continuous. Thus, a useful feature is that the density of the texture map is based on and preferably substantially corresponds to the available image pixel density. Whilst this of course is not a relevant consideration for synthetic models, it is found to be highly advantageous for generating models from real objects. This feature may be independently provided. The features of this method also provide good compression ratios using compression techniques like JPEG. Further the computed parameterisation provides an 'optimal filling' of the texture map, i.e. it leaves only a small proportion of the final texture map unfilled.

It should be noted that the invention is not limited to any particular technique for determining the object shape model. The three dimensional shape can be determined by any convenient technique (as noted above, numerous techniques are known), and if a three-dimensional shape model has already been obtained or if a synthetic model is provided, this can be used directly. Conveniently, the three-dimensional shape model can be obtained by inferring the shape from the images, preferably using a shape from silhouette technique.

Preferably iteratively approximating comprises using a self-organising mapping technique, such as that proposed by Kohonen or a modified version thereof, in particular modified to take into account discontinuities in the map. However, other iterative optimisation techniques may be used.

Preferably the self-organising mapping technique includes a step of determining a winning cell for a training sample and a step of updating neighbouring cells within a defined neighbourhood following determining a winning cell. The step of updating neighbouring cells helps to preserve the topology of the mapping.

The defined neighbourhood for a cell adj acent a discontinuity in the two-dimensional mapping may include a cell from a non-adjacent location in the two-dimensional mapping but corresponding to a point within a defined neighbourhood in the three-dimensional object. The defined neighbourhood may be defined based on location of discontinuities in the two-dimensional mapping. Preferably, the defined neighbourhood includes cells which correspond to points which are within a defined neighbourhood in the three-dimensional object. Preferably, the defined neighbourhood wraps around edges in the two-dimensional mapping. These measures may assist in preserving topology even when neighbouring points are mapped to different sides of a boundary.

Elements of the texture map may correspond directly to vertices of the parameterisation. However, the vertices may be smoothed or interpolated.

Preferably the determined three dimensional position is projected into each of the plurality of images. The three dimensional position may be pre-qualified with reference to a measure of the positions for which each image contains object pixels (this may be useful if a large number of small images are provided, to reduce the number of images fully considered).

Determining a colour value preferably includes determining whether the determined three-dimensional position is visible or occluded in each image. Preferably only pixel values from images in which the position is visible are used in determining the colour value.

Preferably a best image is selected for each pixel of the texture map. Colour values may be determined from multiple images. For example a weighted algorithm taking into account how well the point is shown in each image or more simply a colour value may be determined by averaging colour values from a plurality of images or by using a median value. As discussed below, colour values themselves may be determined using a self-organising mapping technique.

The images are preferably obtained from multiple cameras. Preferably, a measure of camera parameters (including zoom, position) is obtained for each camera and used to determine a scale for each image. Alternatively, more than one image may be obtained from a single camera (normally sequentially), for example by moving the camera or by moving the object (for example on a turntable). Techniques for determining object or camera position or camera parameters such as described in our earlier applications noted below may be used.

As noted above, a useful property of maps produced by the above method is that pixel density is preserved. This may be independently provided in a method of providing a texture map for a three-dimensional object, the method comprising:
obtaining a plurality of images of a three dimensional object, wherein each image corresponds to a different view of the object and contains a number of object pixels corresponding to a portion of the three dimensional object visible in the respective view of the three dimensional object;
deriving a texture map having a density of pixels based on the density of said object pixels.

Whilst the iterative method of the first aspect is a convenient method for implementing the second aspect, it can also be implemented by appropriate modification of conventional methods; for example in the interactive pelting method of Piponi et al described above or the automatic simple heuristic analysis of Niem et al, a further step may be included of processing the texture map to attain or approximate the density of pixels in available images, preferably prior to populating the map.

The method may further comprise compensating the texture map for the effects of ambient lighting to produce a substantially unlit texture map.

The method may further comprise compressing the texture map, for example JPEG compressing the map.

The method may further comprise rendering a view of the object based on the three-dimensional shape reconstruction model of the object and the texture map.

The invention extends to corresponding apparatus, to computer programs and computer program products and to texture maps generated by the method. Preferred features of the method aspect may be applied to other aspects and vice versa.

An embodiment of the invention will now be described, by way of example, with reference to the accompanying drawings in which:-
Fig. 1 schematically depicts a typical studio arrangement;
Fig. 2 schematically depicts the main components of the system;
Fig. 3 schematically depicts the creation of learning samples;
Fig. 4 schematically depicts a modified neighbourhood update using a periodic mapping function which takes into account discontinuities in a two-dimensional map.

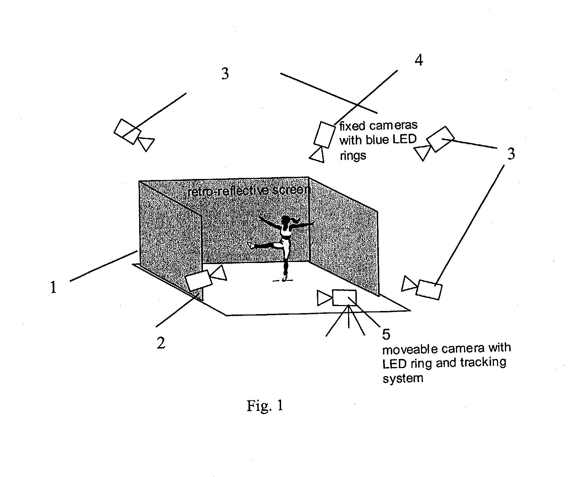

A preferred embodiment will now be described with reference to Fig. 1 which depicts a multi-camera studio system with known camera parameters. Details of the components of such an arrangement are described in GB-A-2,325,807; GB-A-2,321,814 UK patent application No. 0206214.9, the entire disclosures of which are incorporated herein by reference.

This system uses multiple cameras and chroma-key techniques, as depicted in Figure 1 to compute a 3D model of an actor. Referring to the figure, a retro-reflective background 1 is located behind an object (the actor 2). Studio cameras 3 are arranged to take images of the scene, including at least one modified fixed camera 4 including an illuminator comprising a ring of blue LEDs for illuminating the object from the camera direction so that the retro-reflective background reflects light back to the camera and a similarly modified moving camera 5 with a tracking system, for example as described in our []

A technique such as shape-from-silhouette, as described in "W. Niem. Robust and fast modelling of 3d natural objects from multiple views in SPIE Proceedings, Image and Video Processing II, volume 2182, pages 88-397, San Jose, February 1994" is particularly suitable for 3D reconstruction in this application. However, alternative techniques may be used. For example, for applications like 3D-Photography with static objects fewer camera (or only one camera) can be used by taking several pictures of the object by either fixing the camera and rotating the object on a turntable or by moving the camera around the object. For the latter a tracking system is needed that gives the camera parameters. A suitable system for this purpose is described in GB-A-2,325,807.

The chroma-key can be generated by using a retro-reflective screen material and blue light sources on each camera as described in GB-A-2,321,814 or by using onventional coloured (e.g. blue) background.

In the present arrangement, the 3D shape can be inferred preferentially using the silhouette obtained using chroma keying and modified cameras 4 and 5 and the texture map values can be obtained from the cameras 3 (and 4 and 5) preferably under normal lighting conditions.

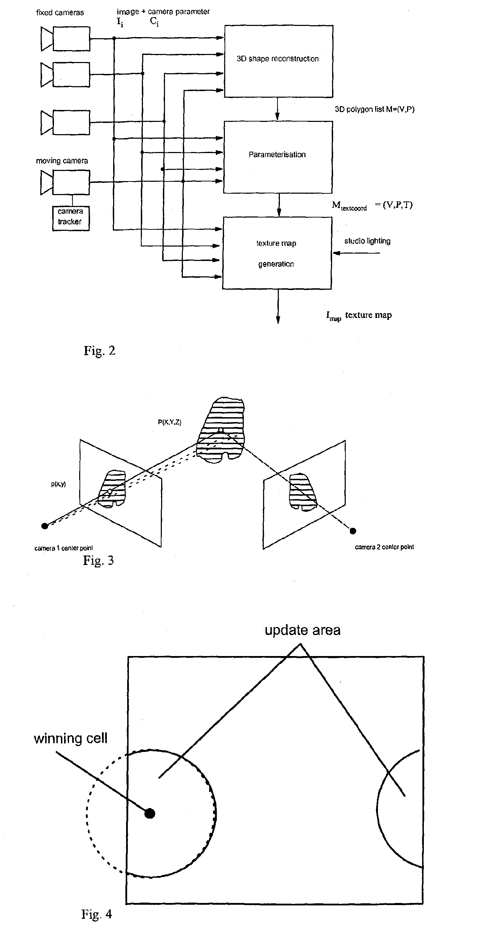

The main components for generation of texture mapped 3D models are depicted in Figure 2. After the 3D shape is reconstructed the computation of the texture maps is preferably carried out in two main steps: In a first step the parameterisation of the 3D surface is computed using the Self-Organising Map learning. In a second step the texture map is computed.

A Self-Organising Map is implemented as a number of cells stored in a 2D array or map. For the 3D to 2D mapping the 'winner cell' is determined, that gives the best match to the 3D input vector. The result of this operation is the 2D co-ordinate of the winning cell. For the training of the Self-Organising Map an iterative learning rule is used, that first finds the winning cell for one training sample and is then updating this cell and the neighbouring cells in a given radius, that is usually decreased during the learning phase. The neighbourhood update is the reason for the preservation of the topology in the mapping.

Normally a 3D surface is closed, i.e. there are no open edges. However, 2D maps are open, i.e. they have bounding edges defined by the interval within they are defined. Therefore it might happen that two surface points that are neighboured on the surface are not longer co-located in the map, because they are mapped to different ends across the map borders. In order to take this into account the use of periodic mapping is proposed here. Therefore the Self-Organising Map learning rule is modified in the way that the update of neighbour cells has to be done across boundaries as depicted in Figure 4. The neighbourhood update can be approximated by a rectangle instead of a circle.

The final computation of the texture map creates colour values form the available camera images and fills these into a 2D image. Therefore an inverse mapping is used, that gives a 3D point for each pixel of the texture map. Knowing the 3D shape and camera parameters the 3D co-ordinates of each object pixel are computed by back-projection of the pixels. This 3D point is then projected into all camera images. The combined colour can be computed by averaging the colours found in the projected positions in all cameras or using the median value. Occluded surface points should not be considered in this computation. As a last step 2D texture co-ordinates are computed, that are used later for the image synthesis. In the usual case when the 3D shape is represented as a polygonal mesh, the texture co-ordinates are just computed by applying the mapping to the co-ordinates of the polygon vertices.

Due to inaccurate 3D shape models or camera parameters the resulting texture map can show some artefacts, like blurring or ghosting. These effects can be minimised by performing a matching of the local neighbourhood of the projected points in the camera images.

The method described above generates texture that give the surface colour under the given lighting. In addition to that texture maps can be light compensated. This can be achieved by using a model of the studio lighting, as indicated in Figure 2 and splitting of the texture map into a component containing the surface colour and an estimate of the surface reflectivity. Off-line computer graphics programs are commercially available that can use this kind of data.

An exemplary implementation will now be explained in more detail, with reference to the following pseudo code in which there are two main modules, firstly Parameterisation which creates the texture mapping surface parameterisation and TextureMapGeneration which creates the texture map from the parameterisation and the available data.

### INPUTS:

3D polygon/triangle mesh M = (V, P), with vertex list V={R₁,..R_{N}} and polygon list P={PO₁,..PO_{M}}
List of input cameras CL={Cᵢ,..,C_{M}}
List of input images IL={I₁,..I_{M}}

### OUTPUT:

3D polygon/triangle mesh with texture coordinates M_{textcoord} = (V, P,T)
Texture map Iₘₐₚ

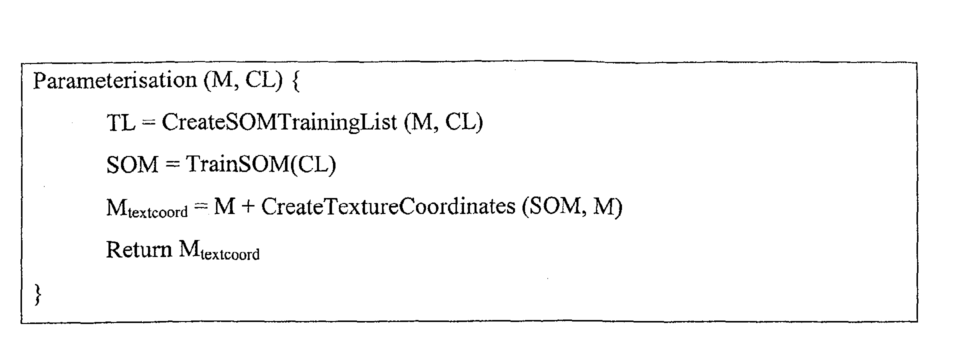

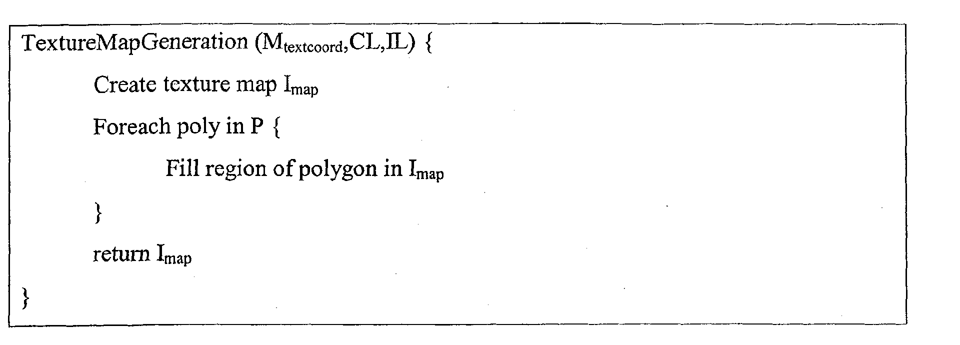

### Sub-Functions:

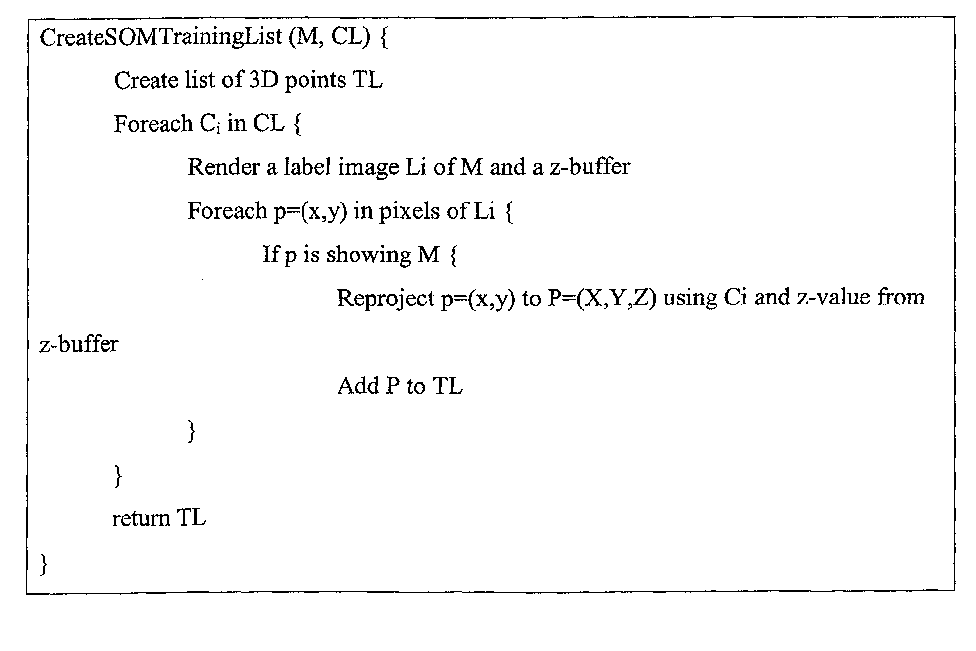

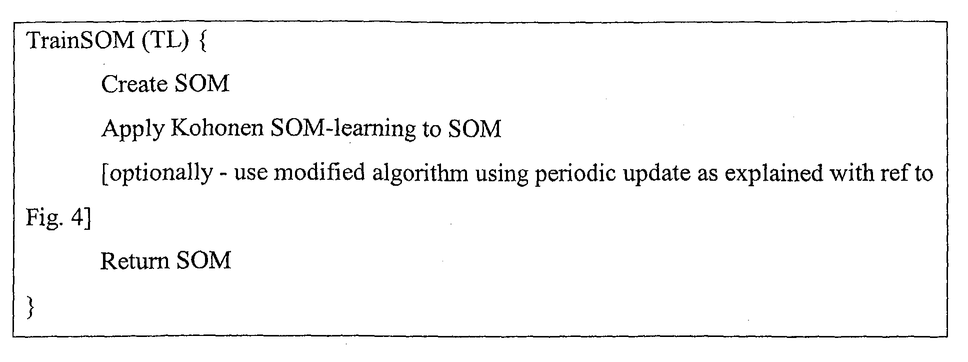

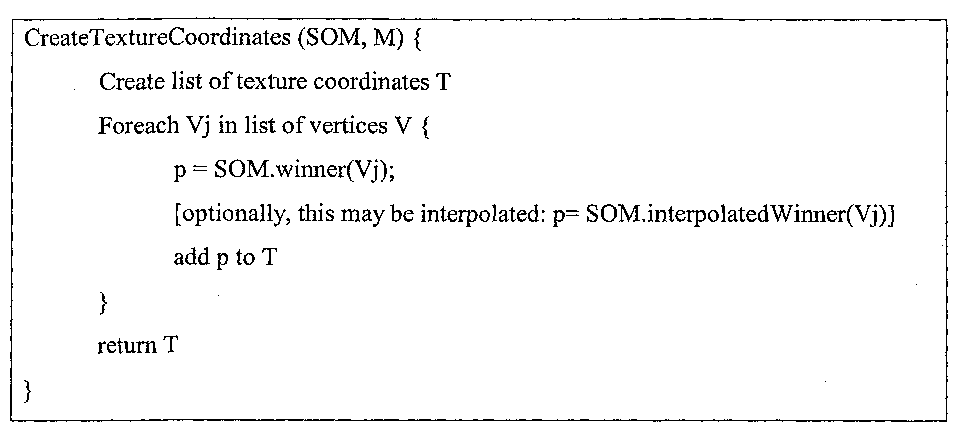

In the case of processing time sequences the proposed parameterisation can be used recursively. That means a Self-Organising Map computed for one time instance is used as a starting value for the next time instance. The resulting sequence of texture maps will be coherent, i.e. a point on a moving 3D surface will be mapped in approximately the same location of the texture maps over the sequence.

Instead of the proposed Self-Organising Maps a different parameterisation method could be implemented, e.g. an iterative optimisation, or technique analogous to that used in simulated annealing.

In addition to the proposal of using 3D co-ordinates of the point samples as the learning examples, the colour of these samples can be included into the input vectors of the Self-Organising Map. In this case a six dimensional vector (R,G,B,X,Y,Z) would be generated. The colour is sampled from an individual camera image. The additional use of the point colour causes a space allocation in the map with a density that corresponds to the variance of colour and brightness of that particular region. This leads to a better spatial compression of the maps. Instead of R,G,B any other colour space could be used, e.g. YUW or Y/C.

The invention can be used as an additional or alternative module for texture map generation for a variety of 3D-scanning or 3D-reconstruction techniques, for example using a laser scanner, stereography, etc.

Further the technique can be used to generate continuous texture maps from non-optimal packed texture maps. An application for that would be (better) compression of already generated texture maps. Another application of the continuous maps would be in systems with dynamic or static multi-resolution 3D shape. These are used to dynamically reduce or increase the number of 3D polygons for transmission and rendering of large scenes and require continuous texture maps.

Modifications of detail may be made and features disclosed herein may be provided independently unless otherwise stated.

## Claims

1. A method of providing a texture map for a three-dimensional object, the method comprising:
obtaining a plurality of images of a three dimensional object, wherein each image corresponds to a different view of the object and contains a number of object pixels corresponding to a portion of the three dimensional object visible in the respective view of the three dimensional object;
obtaining a three-dimensional shape reconstruction model of the object;
deriving a surface parameterisation of the object by iteratively approximating a parameterisation based on object pixels from each of the plurality of images to produce a list of vertices;
defining a texture map having elements corresponding to the vertices;
determining a three dimensional position for each element of the texture map;
projecting the determined three dimensional position for each element into at least one of the plurality of images; and
determining colour values for the elements of the texture map from the object pixels corresponding respectively to the determined three dimensional positions of the elements.

2. A method according to Claim 1 wherein the three-dimensional shape reconstruction model is obtained from the images.

3. A method according to any preceding claim wherein iteratively approximating comprises using a self-organising mapping technique.

4. A method according to Claim 3 wherein the self-organising mapping technique includes a step of determining a winning cell for a training sample and a step of updating neighbouring cells within a defined neighbourhood following determining a winning cell.

5. A method according to Claim 4 wherein the defined neighbourhood for a cell adjacent a discontinuity in the two-dimensional mapping may include a cell from a non-adjacent location in the two-dimensional mapping but corresponding to a point within a defined neighbourhood in the three-dimensional obj ect.

6. A method according to any preceding claim wherein the determined three dimensional position is projected into each of the plurality of images.

7. A method according to any preceding claim wherein determining a colour value includes determining whether the determined three-dimensional position is visible or occluded in each image.

8. A method according to Claim 7 wherein only pixel values from images in which the position is visible are used in determining the colour value.

9. A method according to any preceding claim wherein a best image is selected for each element of the texture map.

10. A method according to any preceding claim wherein a colour value is determined from colour values from a plurality of images.

11. A method according to any preceding claim wherein the images are obtained from multiple cameras.

12. A method according to Claim 11 wherein each image is obtained from a respective camera image.

13. A method according to any of Claims 1 to 11 wherein more than one image is derived from a single camera.

14. A method according to any preceding claim further comprising compensating the texture map for the effects of ambient lighting to produce a substantially unlit texture map.

15. A method of providing a texture map for a three-dimensional object, the method comprising:
obtaining a plurality of images of a three dimensional object, wherein each image corresponds to a different view of the object and contains a number of object pixels corresponding to a portion of the three dimensional object visible in the respective view of the three dimensional object;
deriving a texture map having a density of pixels based on the density of said object pixels.

16. A method according to Claim 15 wherein the density of the texture map is substantially equal to the density of pixels in available images of the object.

17. A method according to any preceding claim further comprising compressing the texture map.

18. A method according to any preceding claim further comprising rendering a view of the object based on the three-dimensional shape reconstruction model of the object and the texture map.

19. A computer program or computer program product comprising instructions for performing a method according to any preceding claim.

20. A texture map produced by a method according to any of Claims 1 to 17.

21. A rendered view of an object produced my a method according to Claim 18.

22. Apparatus for providing a texture map for a three-dimensional object, the apparatus comprising:
means for obtaining a plurality of images of a three dimensional object, wherein each image corresponds to a different view of the object and contains a number of object pixels corresponding to a portion of the three dimensional object visible in the respective view of the three dimensional object;
means for obtaining a three-dimensional shape reconstruction model of the object;
means for deriving a surface parameterisation of the object by iteratively approximating a parameterisation based on object pixels from each of the plurality of images to produce a list of vertices;
means for defining a texture map having elements corresponding to the vertices;
means for determining a three dimensional position for each element of the texture map;
means for proj ecting the determined three dimensional position for each element into at least one of the plurality of images; and
means for determining colour values for elements of the texture map from the object pixels corresponding to the determined three dimensional position.

23. Apparatus or a method or a computer program or computer program product substantially as herein described.
